## Europäisches Patentamt

## European Patent Office

## Office européen des brevets

(19)

(11) Veröffentlichungsnummer: **0 379 621**
**A1**

# EUROPÄISCHE PATENTANMELDUNG

(12)

(21) Anmeldenummer: **89101391.4**

(22) Anmeldetag: **27.01.89**

(51) Int. Cl.⁵: **C10B 53/00, C10B 1/10**

(43) Veröffentlichungstag der Anmeldung:
**01.08.90 Patentblatt 90/31**

(84) Benannte Vertragsstaaten:
**DE FR GB IT**

(71) Anmelder: **Zink, Helmut**
**Kelterstrasse 43**
**D-7441 Unterensingen(DE)**

(72) Erfinder: **Zink, Helmut**
**Kelterstrasse 43**
**D-7441 Unterensingen(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Reifen-Pyrolyse.**

(57) In einem Verfahren zum thermischen Aufbereiten, insbesondere Pyrolysieren von kohlenstoffhaltigem Ausgangsmaterial, das insbesondere einen hohen Gehalt an Polymeren, organischen Stoffen, zb. Altgummi, Altreifen, Kunststoffabfälle oder dgl., aufweist, mittels aus einem Verbrennungsvorgang stammenden Verbrennungsgasen, wobei die aus der thermischen Zerlegung stammenden Gase und Dämpfe abgekühlt, kondensiert und gewaschen werden, wird das Ausgangsmaterial mittels praktisch sauerstofffreien Verbrennungsgasen thermisch zerlegt, wobei der während der Durchführung des Verfahrens herrschende Druck durch Überdruck von Flüssigkeit bestimmt wird. Eine Vorrichtung zur Durchführung des Verfahrens hat ein Führungsorgan (16), welches aus einem Brenner (4) stammende Verbrennungsgase durch das Ausgangsmaterial (17) führt. Zur Erzeugung von Überdruck durch Flüssigkeit taucht ein Pyrolysegas führendes Organ (26, 38) in einen im Durchmesser größeren, mit Flüssigkeit gefüllten, offenen Behälter (25; 39) ein.

EP 0 379 621 A1

Fig.1

# Verfahren und Vorrichtung zum thermischen Aufbereiten, insbesondere Pyrolysieren von Ausgangsmaterial

Die Erfindung bezieht sich auf ein Verfahren entsprechend dem Oberbegriff des Anspruches 1.

Bei einem bekannten Verfahren der vorgenannten Art wird zerkleinerter Müll zusammen mit organischen Schlämmen über ein gasdichtes Schleusensystem in einen indirekt beheizten Drehrohrofen eingeschleust, der wahlweise mit Erdgas-und/oder Schwelgas beheizt werden kann. Der Drehrohrofen ist in sechs unabhängig voneinander beheizende Zonen unterteilt. Das aus dem Drehrohrofen abgezogene Schwelgas wird in einem Zyklon entsaubt und gelangt dann zwecks Crackung der langkettigen Kohlenwasserstoffe in den Crack-Reaktor, an dessen oberem Ende ein Brenner bzw. die Luftzufuhr vorgesehen ist. Der Crack-Reaktor steht mit einem indirekten Luftkühler in Verbindung dem ein Wäscher folgt, in welchem Ruß und anorganische Schadstoffe entfernt werden. Das gereinigte Pyrolysegas wird für die Rückführung zum Drehrohrofen sowie zum Crack-Reaktor verdichtet (DE-OS 28 25 429)

Der vorliegenden Erfindung liegt ausgehend von diesem Stand der Technik die Aufgabe zugrunde, verhältnismäßig großstückiges Ausgangsmaterial thermisch aufzubereiten. Diese Aufgabe wird durch die Merkmale im Kennzeichnungsteil des Anspruches 1 erfindungsgemäß gelöst. Das Ausgangsmaterial wird entweder mittelbar oder unmittelbar von den Heizgasen umströmt. Beim unmittelbaren Umströmen des Ausgangsmaterials durch die Heizgase wird dieses unmittelbar beaufschlagt, wodurch die den Heizgas innenwohnende Wärme ohne Einschaltung eines Zwischenträgers unmittelbar auf das Ausgangsmaterial übergeht und Wärmeverluste verringert werden, jedoch eine Mischung aus Pyrolysegas und Rauchgas aufbereitet werden muß. Wird das Rauchgas im wesentlichen von dem Ausgangsmaterial abgehalten, so kann das Pyrolysegas und das Rauchgas voneinander getrennt abgeführt werden, wodurch die aufzubereitende Gasmenge geringer wird. Zur Erzeugung von praktisch luftfreien Heizgasen dient ein Brenner zum Verbrennen von flüssigen oder festen Brennstoffen, der praktisch ohne Luftüberschuß arbeitet. Der während des Verfahrens herrschende Druck wird in einfacher Weise aufrechterhalten, ohne daß von außen Luft in die Vorrichtung zur Durchführung des Verfahrens eindringen und eine Oxydation bewirken kann.

Die Erfindung betrifft auch eine Vorrichtung zur Durchführung des Verfahrens entsprechend den Merkmalen des Anspruches 3. In der Drehtrommel kann das Heizgas das thermisch zu zerlegende Ausgangsmaterial entweder mittelbar oder unmittelbar umströmen. In die zur Aufrechterhaltung des Druckes dienende Wascheinrichtung, Nachverbrennungsanlage oder dgl. kann keine das Verfahren benachteiligende Luft einfließen.

Die Aufnahme von ringförmigen Körpern, insbesondere von Autoreifen, ist durch die Merkmale des Anspruches 4 möglich. Ist das Führungsorgan mit einem offenen Behälter zur Aufnahme des Ausgangsmaterials innerhalb der Drehtrommel versehen, so können auch andere Körper in dem offenen Behälter aufgenommen werden.

Durch die Merkmale des Anspruches 5 kann eine Verbindungsleitung zur Verhinderung von Kondensat anfangs beheizt und während des stationären Betriebs gekühlt werden.

Dichtprobleme zwischen der ortsfesten Außentrommel und der Drehtrommel werden durch die Merkmale des Anspruches 6 vermieden.

Eine besonders günstige Führung von Gasen und Dämpfen wird durch die Merkmale des Anspruches 7 erreicht.

Zur Aufrechterhaltung eines geringen Überdruckes in der die Pyrolysegase führenden Einrichtung dienen die Merkmale des Anspruches 8.

Ein Entfernen der Drehtrommel aus der Außentrommel ist durch die Merkmale des Anspruches 9 möglich.

Eine indirekte Beheizung des Ausgangsmaterials zum Zwecke der Trennung von Pyrolysegasen und Heizgasen ergibt sich aus den Merkmalen des Anspruches 10.

Weitere Vorteile finden sich in den übrigen Ansprüchen, der Beschreibung und der Zeichnung. In dieser ist eine Vorrichtung zum Pyrolysieren von Kraftfahrzeugreifen als Ausführungsbeispiel des Gegenstandes der Erfindung schematisch dargestellt. Es zeigen

Fig. 1 einen Längsschnitt durch die vereinfacht dargestellte Vorrichtung,

Fig. 2 einen Querschnitt nach Linie II-II in Fig. 1,

Fig. 3 einen Ausschnitt aus Fig. 2 in größerem Maßstab und in Zeichenebene um einen Winkel von 45° geschwenkt gezeichnet,

Fig. 4 ein Fließbild des mit der Vorrichtung durchzuführenden Verfahrens in gegenüber Fig. 1 geänderter Darstellung,

Fig. 5 eine Variante des Ausführungsbeispiels nach Fig. 1.

Fig. 6 eine andere Variante des Ausführungsbeispiels nach Fig. 1.

Eine ortsfeste Außentrommel 1 hat auf der in der Zeichnung linken Seite einen um ein oberes oder seitliches Gelenk abklappbaren Deckel 2 und einen rückwärtigen geschlossenen Teil 3. Die Außentrommel 1 ist von einer nicht dargestellten Kühlschlange und/oder von einer Wärmeisolierschicht umgeben. An dem Deckel 2 ist ein Brenner 4, insbesondere Ölbrenner, befestigt, an dessen Brennerdüse ein zentrisch im Deckel 2 angeordnetes, insbesondere aus Keramik oder Edelstahl bestehendes Brennerrohr 5 angebracht ist. Der Brenner 4 kann auch in einer Vorkammer angeordnet sein. An der unteren Seite des Deckels 2 ist ein Antriebsmotor 6 mittels eines zwei Abtriebe aufweisenden Getriebes 7 angebracht, dessen beide Wellen 8, 9 ins Innere der Außentrommel 1 ragen und an ihren freien Enden jeweils mit einem Kupplungsteil versehen sind.

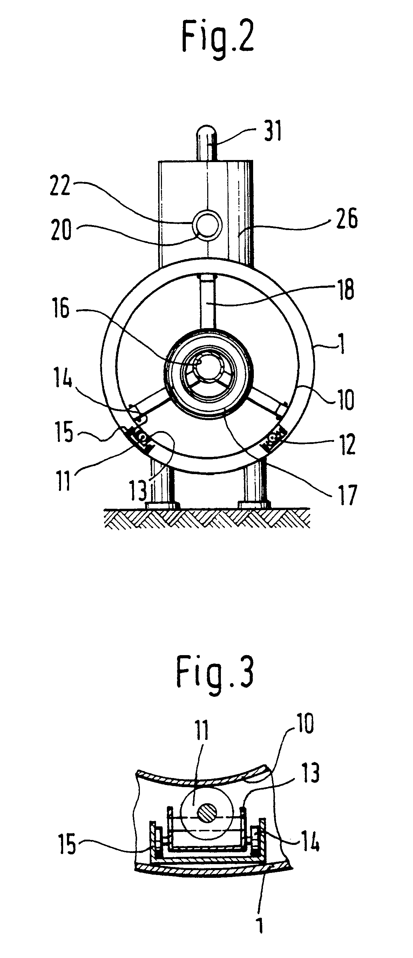

In der mit waagerechter Achse angeordneten Außentrommel 1 ist eine achsparallel dazu angeordnete, wärmeisolierte Dreh- oder Innentrommel 10 auf Walzen 11 und 12 drehbar gelagert (Fig. 2). Die die Walzen 11 und 12 tragenden Wellen sind in Schließlage des Deckels 2 über zu den vorgenannten Kupplungsteilen komplementären Kupplungsteilen mit den Wellen 8, 9 drehfest verbunden. Die die Innentrommel 10 abstützenden Walzen 11, 12 sind in achsparallel zu der Innentrommel 10 angeordneten Schienen 13 drehbar gelagert. Diese Schienen sind mittels mit dazu senkrechter Achse angeordneten paarweisen Rollen 14 in einer längs sich erstreckenden U-Schiene 15 derart gelagert, daß die Innentrommel 10 gegenüber der ortsfesten Außentrommel 11 zum Be- und Entladen bewegt werden kann. Die Innentrommel 10 kann auch anders gelagert und/oder auch anders z.B. von außen angetrieben sein.

In der Innentrommel 10 ist ein wärmeisoliertes und mit Durchgangslöchern versehenes, als Tragrohr ausgebildetes Führungsorgan 16 koaxial zum Brenner 5 angeordnet und dient zum Tragen von Ausgangsmaterial, vorzugsweise acht bis zehn Autoreifen 17. Die Durchgangslöcher sind je nach dem vom Tragrohr 16 gehaltenen Ausgangsmaterial ausgebildet und angeordnet. Zum Beispiel können sich in dem Tragrohr 16 auf der vom Brennerrohr 5 abgewandten Seite mehr und/oder anders ausgebildete Durchgangslöcher befinden als in der dem Brennerrohr 5 benachbarten Seite des Tragrohres 16. Dieses ist innerhalb der Innentrommel 10 mittels als Tragsternen ausgebildeten Stützen 18 abgestützt, die mit in ihrer Mitte angeordneten Ringen auf das Tragrohr 16 aufgeschoben sind und an ihren äußeren Enden mit senkrecht zur Achse des Tragrohres 16 angeordneten Walzen derart versehen sind, daß das Entfernen des Tragrohres 16 samt Autoreifen 17 und Tragsternen 18 aus der Innentrommel 10 erleichtert wird. Das Tragrohr kann auch aus Stäben nach Art eines Korbes ausgebildet sein oder es kann längs gespannte Ketten oder dgl. als Träger des Ausgangsmaterials aufweisen, auf denen Keramikteile aufgereiht sein können. Das Tragrohr dient zum Heranführen von Wärme zum gesamten aufzubereitenden Material.

Die Innentrommel 10 ist auf seiten des Teiles 3 der Außentrommel 1 abgeschlossen. Sie kann jedoch falls erforderlich dort einige Durchgangslöcher aufweisen. Auf der dem Brennerrohr 5 zugewandten Seite ist eine aus Blech bestehende kegelförmige Schleuse 19 zum Zurückhalten nicht vergaster oder verflüssigter Teile oder Teilchen vorgesehen, die an ihrem in der Zeichnung oberen Ende oder an der Seite mittels eines Gelenkes mit der Innentrommel 10 verbunden ist und zwischen deren inneren eingebogenen und im Winkel zur Radialen nach außen gerichteten Wand ein Abstand zum Tragrohr 16 vorgesehen ist.

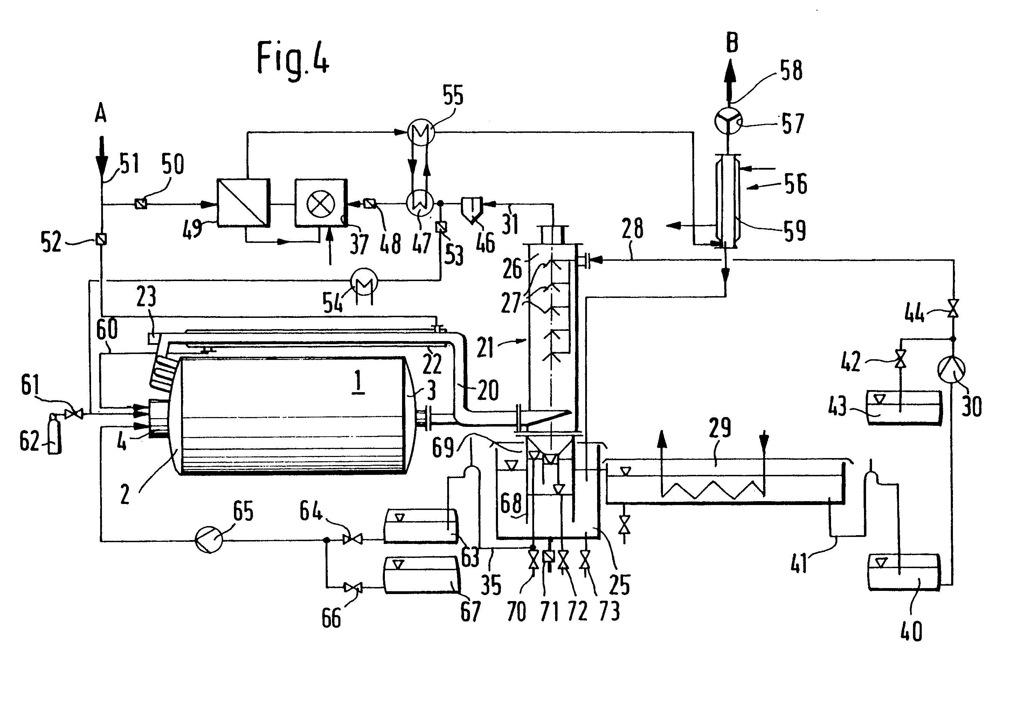

Eine als Verbindungsrohr ausgebildete Leitung 20 ist zwischen dem dem öffenbaren Deckel 2 benachbarten oberen Teil der Außentrommel und einer Einrichtung 21 zum Kühlen, Kondensieren und Waschen, nachfolgend auch Wäscher oder Wascheinrichtung genannt, vorgesehen. Bei der abgewandelten Vorrichtung nach Fig. 4 ist das Verbindungsrohr 20 mittels eines Rohrregisters mit dem Innenraum der Außentrommel 1 verbunden. Das Verbindungsrohr 20 ist mit Abstand von einem Mantel 22 umgeben, an den auf seiten des Brenners 4 eine thermische Nachverbrennungsanlage 23, angeschlossen ist. Die von dem Mantel 22 umgebene Verbindungsleitung 20 kann auch anderweitig nach Bedarf erwärmt oder gekühlt werden.

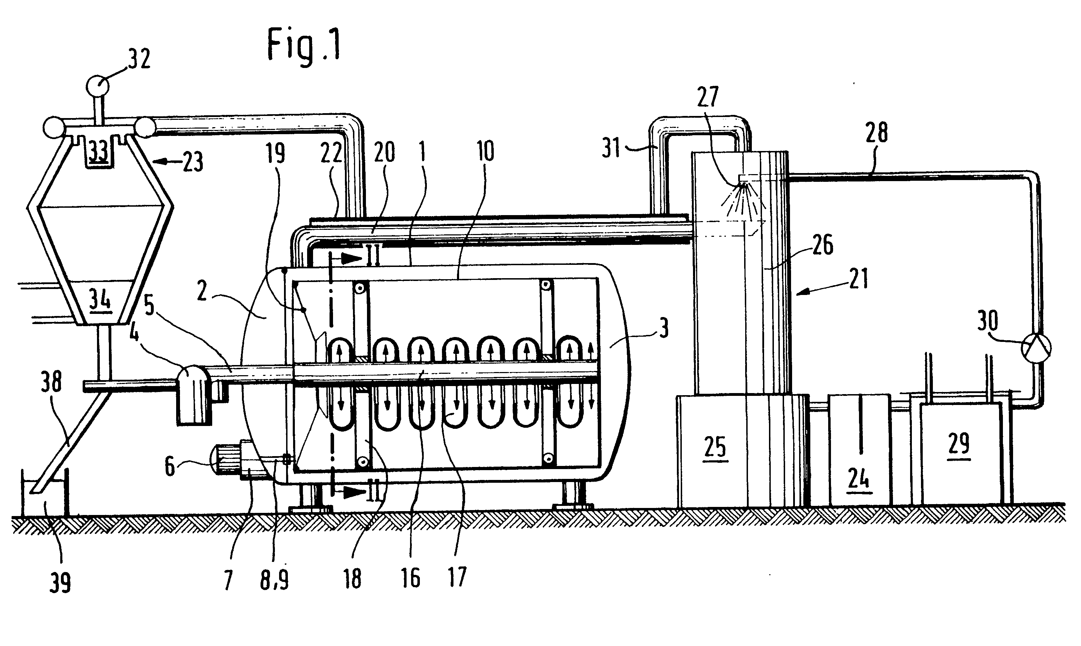

Die Wascheinrichtung 21 hat einen Sammelbehälter 25, in den ein im Durchmesser kleinerer Kondensator oder Waschbehälter 26 hineinragt, in welchen das Verbindungsrohr 20 vorzugsweise an dessen Unterseite mündet. In den Waschbehälter 26 kann auch ein mit der Außentrommel 1 verbundenes Verbindungsrohr münden (Fig .4) Am oberen Ende des Waschbehälters 26 befinden sich Sprühdüsen 27, die sich gemäß Fig. 4 nach unten erstrecken können und die mittels einer Leitung 28 mittelbar mit dem Sammelbehälter 25 verbunden sind, wobei am Ausgang des Sammelbehälters 25 in der Leitung 28 ein Ölabschalter 24, ein Wärmeaustauscher 29 und eine Pumpe 30 vorgesehen sind, wobei der Wasserspiegel im Sammelbehälter 25, im Ölabscheider 24 und in dem den Wärmeaustauscher 29 aufnehmenden, vorzugsweise oben offenen und mit einem Überlauf versehenen Behälter gleich ist. Das Öl aus dem Ölabschalter kann dem Brenner 4 zugeführt werden (Fig. 4). Die Oberseite des Waschbehälters 26 ist über eine Leitung 31 und den Mantel 22 mit der Nachverbrennungsanlage 23 verbunden (Fig. 1). Die Nachverbrennungsanlage 23 ist an eine Brennstoffhilfsquelle 32 angeschlossen, die bei Bedarf Brennstoff liefert. Einem Öl-Gas-Brenner 33 in der Nachverbrennungsanlage 23 folgt ein Wärmeaustauscher 34. Der Ausgang der Nachverbrennungsanlage 23 ist mit dem Brenner 4 verbunden. Die Nachverbrennungsanlage 23 sorgt nach dem Pyrolysevorgang für sauerstofffreie Luft zum Abkühlen der Innentrommel 10. Sie ist über einen Auslaß 38 mit einem Flüssigkeitsbehälter 39 verbunden, in den der Auslaß 38 eintaucht.

In dem Sammelbehälter 25 werden Wasser, Öl und Schlamm voneinander getrennt, wobei das Öl gegebenenfalls über den zwischen dem Sammelbehälter 25 und dem Wärmeaustauscher 29 angeordneten Ölabschalter 24 über eine als Leitung 35 (Fig. 4) aufweisende Einrichtung zum Rückführen dem Ölbrenner 4 zugeführt wird.

Gemäß Fig. 4 ist zwischen dem Wärmeaustauscher 29 und der Pumpe 30 ein Flüssigkeitsbehälter 40, insbesondere Wasserbehälter, angeordnet, dessen zu dem Wärmeaustauscher 29 geführte Verbindungsleitung 41 entlüftbar ist. Der Pumpe 30 folgen in Richtung des Waschbehälters 26 ein mit einem Stellventil 42 versehener und mit einem Flüssigkeitsbehälter 43, insbesondere Wasserbehälter, verbundener Anschluß und ein Stellventil 44.

In der Leitung 31 befindet sich gemäß Fig. 4 ein Tropfenabscheider 46, dem ein Wärmeaustauscher 47, eine Drosselklappe 48, eine Brennkammer 37 für die Beheizung auch mit Zusatzgas und ein Luftvorwärmer 49 folgen. Dieser ist über eine Drosselklappe 50 mit einem Ansaugstutzen 51 verbunden, an den über eine andere Drosselklappe 52 der Mantel 22 im Bereich der Wascheinrichtung 21 angeschlossen ist. An die Leitung zwischen dem Tropfenabscheider 46 und dem Wärmeaustauscher 47 ist über eine Drosselklappe 53 und einen Kühler 54 der Brenner 4 angeschlossen. Dem Luftvorwärmer 49 folgen auf der Rauchgasseite ein mit dem Wärmeaustauscher 47 verbundener Wärmeaustauscher 55, ein Kondensator 56, eine Pumpe 57 und ein Anschlußstutzen 58. Der Kondensator 56 hat einen mit Kühlflüssigkeit, insbesondere Wasser, beschickten Kühlmantel 59 und ist auf seiner Unterseite mit dem Sammelbehälter 25 verbunden. Der mit der Drosselklappe 50 verbundene Luftvorwärmer 49 ist an die Brennkammer 37 angeschlossen. Zwischen dem Brenner 4 und der diesem benachbarten Seite des Mantels 22 ist eine Verbindungsleitung 60 vorgesehen. Im Bereich des Brenners 4 ist über ein Stellventil 61 eine Stickstoffquelle 62 in Form einer Gasflasche angeschlossen, die für eine etwa erforderliche Notkühlung vorgesehen ist.

Die die Leitung 35 aufweisende Einrichtung hat einen Ölsammelbehälter 63, ein Stellventil 64 und eine Förderpumpe 65, wobei gemäß Fig. 4 die Einrichtungen 38 und 39 nach Fig. 1 entfallen können. Die Leitung 35 wird zwischen dem Sammelbehälter 25 und dem Ölsammelbehälter 63 entlüftet.

An die Leitung zwischen dem Stellventil 64 und der Pumpe 65 ist über noch ein Stellventil 66 ein Heizölbehälter 67 angeschlossen.

Der oben genannte Sammelbehälter 25 hat nach Fig. 4 einen an den Waschbehälter 26 angeschlossenen zylinderförmigen Einsatz 68, dessen Durchmesser dem Durchmesser des Waschbehälters 26 entspricht. In dem zylinderförmigen Einsatz 68 ist ein ebenfalls an den Waschbehälter 26 unten angeschlossener trichterförmiger Einsatz 69 angeordnet. Die Leitung 35 ragt in den Zwischenraum zwischen den beiden Einsätzen 68, 69 hinein und hat ein nach außen geführtes Stellventil 70. An die Unterseite des Sammelbehälters 25 ist eine Anschlußleitung mit einem drosselnden Schließventil 71 angeschlossen. Ein mit einem Schließventil 72 versehenes Auslaßrohr ragt weniger weit als die Leitung 35 in den Zwischenraum zwischen den beiden Einsätzen 68 und 69 hinein und ein mit einem Schließventil 73 versehenes Auslaßrohr endet kurz oberhalb des Bodens des Sammelbehälters 25.

In der mit einer Drehzahl von etwa 1,5 bis 2 U/min., insbesondere 1,8 U/min. sich drehenden Innentrommel 10 werden die Autoreifen 17 mittels den eine Temperatur zwischen 500°C und 700°C, vorzugsweise 600°C, aufweisenden Verbrennungs- oder Heizgasen praktisch ohne Sauerstoff thermisch zerlegt, wobei die Autoreifen von den Heizgasen möglichst allseitig gleichmäßig unmittelbar umströmt werden. Hierbei entstehen Dämpfe und Gase, die über das im stationären Zustand gekühlte Verbindungsrohr 20 mit einer Temperatur zwischen 300°C und 400°C, vorzugsweise 350°C, in den Waschbehälter 26 gelangen und dort abgekühlt werden. Ein zu frühes Kondensieren der Pyrolysedämpfe und -gase durch zu starke Abkühlung soll möglichst vermieden werden. Stahlschrott und feste Reifenrückstände sowie Ruß verbleiben weitgehend in der Innentrommel 10 und werden von der Schleuse 19 zurückgehalten. Beim Übergang in den Waschbehälter 26 haben die Gase und Dämpfe eine Geschwindigkeit von etwa 10 m/sec. In dem Waschbehälter 26 werden die Gase und Dämpfe mit eingesprühtem Kühlwasser vermischt und bis zur Kondensation der Pyrolysedämpfe vorzugsweise auf ca. 80°C abgekühlt. Die mitgeführten Rußteilchen werden weitgehend ausgewaschen.

In dem Sammelbehälter 25 wird die mit Partikeln angereicherte Emulsion in verschiedene Phasen getrennt. In dem trichterförmigen Einsatz 69 steigen die leichteren Ölkomponenten nach oben und die schwerere Wasserphase mit Partikeln sinkt nach unten. Auf dem Boden des Sammelbehälters 25 angesammelter Schlamm kann über das Schließventil 71 zum Entsorgen abgezogen werden. Öl wird über die Leitung 35 von dem Sammelbehälter 25 und/oder dem Ölabscheider 24 abgezogen und Wasser über das Schließventil 73. Falls sich an der Phasengrenze Partikel anreichern, ist für deren Abzug das Schließventil 72 vorgesehen. Der Sammelbehälter 25 und/oder der den Wärmeaustauscher 29 aufnehmende Behälter und/oder der Flüssigkeitsbehälter 39 sind wegen eventuell auftretender Verpuffungen oben offen. Der Wasserstand zwischen dem Ein- oder Ausfluß auf der einen Seite und dem Überlauf auf der anderen Seite bestimmt den herrschenden Überdruck in der Vorrichtung. Oberhalb der Einsätze 68 und 69 kann ein Drahtgeflecht oder dgl. als Sieb zur Abbremsung des Strahles heißer Gase und zur Unterstützung der Tropfenbildung vorgesehen sein.

In dem mit dem Sammelbehälter 25 verbundenen und mit einem eigenen Abflußventil versehenen Wärmeaustauscher 29 wird das aus dem Sammelbehälter 25 stammende Wasser auf insbesondere etwa 10°C gekühlt. Wenn im Wasser Partikel vorhanden sind, wird das Wasser in den Wärmeaustauscher 29 oben eingefüllt und etwas über dem Boden mindestens teilweise abgezogen. Von dem Wärmeaustauscher 29 stammendes Wasser wird insbesondere in dem Wasserbehälter 40 gesammelt und dort eventuell neutralisiert, von wo es, oder unmittelbar von dem den Wärmeaustauscher 29 aufnehmenden Behälter mittels der Pumpe 30 entweder in den Waschbehälter 26 und/oder in den Flüssigkeitsbehälter 43 gefördert wird.

Die aus dem Waschbehälter 26 stammenden Gase werden insbesondere über den Tropfenabscheider 46 und den Wärmeaustauscher 47 geführt und in der Brennkammer 37 (Fig. 4) oder der Nachverbrennungsanlage 23 (Fig. 1) nach Zuführung über die Leitung 31 und den Zwischenraum zwischen dem Mantel 22 und dem Verbindungsrohr 20, wo sie unter eigener Erwärmung zur Kühlung der Gase im Verbindungsrohr dienen, eventuell unter Verwendung von zusätzlichem Heizgas oder Heizöl verbrannt. Die Energie aus diesem Verbrennungsvorgang wird gemäß dem Ausführungsbeispiel nach Fig. 4 über den Luftvorwärmer 49 und/oder über die miteinander verbundenen Wärmeaustauscher 47, 55 dem aus dem Waschbehälter 26 stammendem Gas vor dessen Verbrennung zugeführt. Mit Überschußenergie aus den Wärmeaustauschern 29 und/oder 31 kann Brauchwasser erwärmt werden. Nach dem Wärmeaustauscher 55 gelangen die Rauchgase in den Kondensator 56 und werden mittels der Pumpe 57 in Richtung des Pfeiles 8 nach außen gefördert. Von den Rauchgasen im Kühlmantel 59 abgeführte Wärme kann dem Verfahren wieder zugeführt oder an einen Verbraucher abgegeben werden. Die kalten Rauchgase können zum Kühlen der Außentrommel 1 benutzt werden.

Die vom Sammelbehälter 25 stammenden Pyrolyseöle werden im Ölsammelbehälter 63 gesammelt und gegebenenfalls mit Heizöl aus dem Heizölbehälter 67 dem Ölbrenner 4 zugeführt. Zum Abkühlen der Innentrommel 10 wird bei stillstehendem Brenner 4 über die Nachverbrennungsanlage 23 sauerstofffreie Luft umgewälzt und wegen der beim Abkühlen auftretenden Volumenverminderung zugeführt, wobei der Luftsauerstoff durch die Flamme im Brenner 33 entzogen wird. Die vorbeschriebenen Vorrichtungen arbeiten praktisch in einem Gas-und Wasser-Kreislauf mit geringem Überdruck, wobei der Überdruck durch den vom nach außen austretenden Gas zu überwindenden und durch Wasserüberstand geschaffenen Druck bestimmt ist.

Zum Beschicken der Innentrommel 10 mit Autoreifen 17 wird der Deckel 2 der Außentrommel 1 geöffnet, so daß die Innentrommel 10 zugänglich ist. Diese wird nach außen gefahren. Nach dem Öffnen der Schleuse 19 ist der Innenraum der Innentrommel 10 zugänglich. Er kann gereinigt und anschließend wieder mit Autoreifen beschickt werden. Nachdem die Schleuse 19 wieder ihre Betriebslage eingenommen hat, die Innentrommel 10 sich in der Außentrommel 1 befindet und der Deckel 2 geschlossen ist, können die neu aufzubereitenden Autoreifen 17 einem neuen Pyrolyseverfahren unterworfen werden.

Anstelle des Tragrohres 16 kann eine andere Tragvorrichtung für das Tragen z.B. anders geformtem Materials, von in einem weithin offenen Behälter, insbesondere Korb, untergebrachtem Material oder dgl. vorgesehen sein. Die Brenner können dem verwendeten Brennstoff entsprechend als Öl- oder Gasbrenner ausgebildet sein.

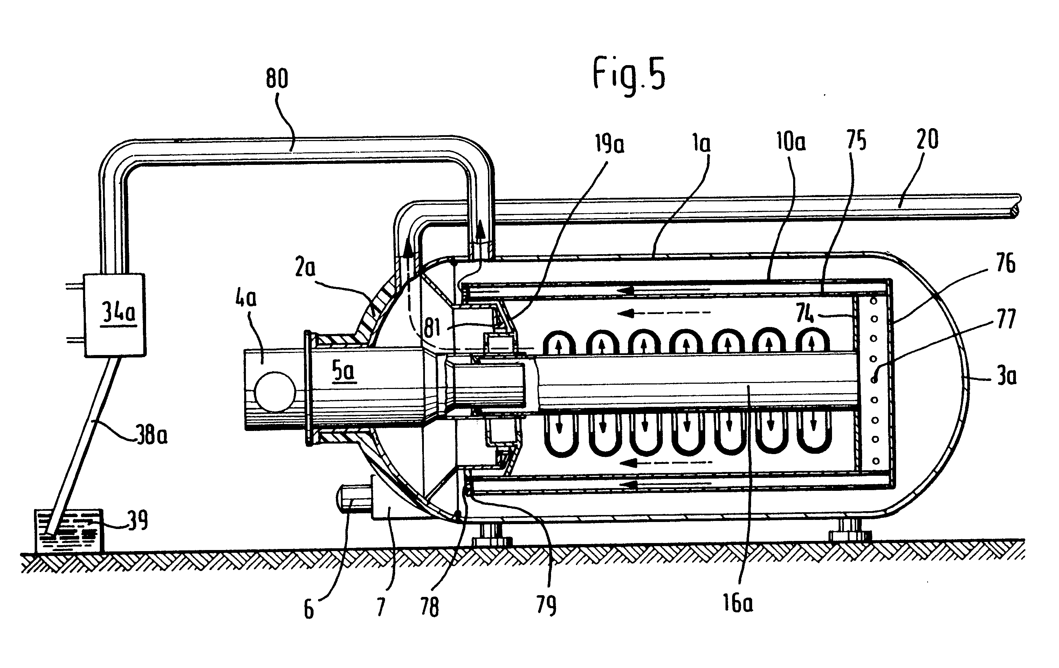

Beim Ausführungsbeispiel nach Fig. 5 sind dem Ausführungsbeispiel nach den Fig. 1 bis 3 entsprechende Teile mit gleichen Bezugszeichen versehen, wobei Bezugszeichen von geänderten Teilen der Buchstabe a beigefügt ist.

Das mit dem Brenner 4a verbundene Brennerrohr 5a ist in den wärmeisolierten Deckel 2a eingesetzt, greift mit seinem im Durchmesser verringerten Teil mit Spiel in das als an seinem Mantel lochlose Tragrohr ausgebildete Führungsorgan 16a ein und umfaßt mit einem daran angebrachten Außenrohr den ihm zugewandten Teil des Führungsorganes 16a ebenfalls mit radialem Spiel. Das Brennerrohr 5a kann aus dem Führungsorgan 16a entfernt werden. Am Übergang zwischen dem Brennerrohr 5a bzw. dessen Außenrohr und dem Führungsorgan 16a kann eine Schleuse in Form einer Labyrinthdichtung oder dgl. vorgesehen sein.

Das Führungsorgan 16a ist an seinem vom Brennerrohr 5a entfernten Ende an einem Wandteil 74 befestigt, der an einer Zwischentrommel 75 angebracht ist, die sich mit radialem Abstand innerhalb der Dreh- oder Innentrommel 10a befindet. Die Zwischentrommel 75 ist an einem Boden 76 der Innentrommel 10a befestigt. Zwischen dem Wandteil 74 und dem Boden 76 weist die Zwischentrommel 75 Durchgangslöcher 77 auf. Das Führungsorgan 16a kann vom Wandteil 74 frei herausragen oder im Abstand davon mit mit mindestens einer radialen Stütze versehen sein.

An der dem Brennerrohr 5a benachbarten Seite sind die beiden Trommeln 10a und 75 mit einer Durchgangslöcher 78 aufweisenden Stirnwand 79 versehen. Oberhalb dieser Stirnwand ist an die ortsfeste Außentrommel 10 ein Abzugsrohr 80 für Heizgas angeschlossen, das über einen Wärmetauscher 34a und ein Auslaßrohr 38a mit dem Flüssigkeitsbehälter 39 verbunden ist, worin das Auslaßrohr 38 um ein bestimmtes Maß eintaucht. Durch die Eintauchtiefe des Auslaßrohres 38a wird der Druck innerhalb der Außentrommel 1 bestimmt.

An dem von der Außentrommel 1 abklappbaren und mit einer Isolierung versehenen Deckel 2a ist die Pyrolysegas führende Leitung 20 angeschlossen. Am Deckel 2a ist auf seiten der Zwischentrommel 75 eine mit der Schleuse 19a zusammenwirkende, aus Blech bestehende und ebenfalls vorzugsweise als Labyrinth ausgebildete Schleuse 81 vorgesehen, wodurch der Innenraum der Zwischentrommel 75 von dem Außenraum der Drehtrommel 10a nach Art einer Labyrinthdichtung getrennt ist. Die beiden Schleusen 19a und 81 entfernen sich beim Öffnen des Deckels 2a voneinander.

Der wesentliche Unterschied zwischen den Bauformen nach Fig. 1 und 5 besteht darin, daß bei der Bauform nach Fig. 1 das Ausgangsmaterial, insbesondere Autoreifen, von den Heizgasen des Brenners 4 unmittelbar umströmt werden, wogegen bei der Bauform nach Fig. 5 die Heizgase des Brenners 4a um das Ausgangsmaterial herumgeführt werden, ohne dieses unmittelbar zu berühren. Bei der Bauform nach Fig. 5 werden die Heizgase durch das auf seinem Umfang geschlossene Führungsorgan 16a hindurch zwischen dem Wandteil 74 und dem Boden 76, die Durchgangslöcher 77 durchquerend und dann in Gegenrichtung zwischen der Innentrommel 10a und der Zwischentrommel 75 zu den an der Stirnwand 79 angeordneten Durchgangslöchern 78 geführt. Schließlich werden die Heizgase über das Abzugsrohr 80 abgeführt. Die aus dem Ausgangsmaterial stammenden Pyrolysegase gelangen in den zwischen dem Führungsorgan 16a und der Schleuse 9a, vorhandenen Ringraum und von hier aus in die an den Deckel 2a angeschlossene, in den Waschbehälter 26 führende Leitung 20.

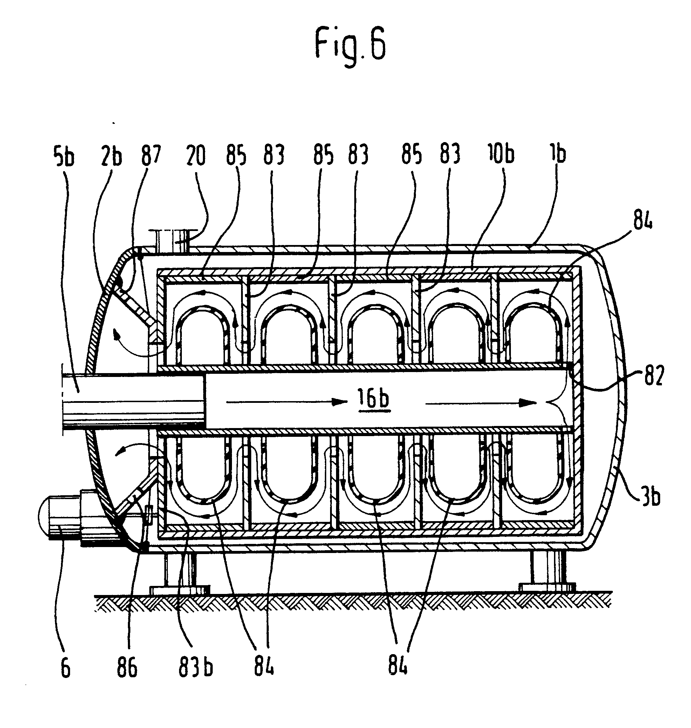

Bei dem Ausführungsbeispiel nach Fig. 6 sind dem Ausführungsbeispiel nach den Fig. 1 bis 3 entsprechende Teile mit gleichen Bezugszeichen versehen, wobei Bezugszeichen von geänderten Teilen der Buchstabe b beigefügt ist.

Das Brennerrohr 5b ragt in das als Tragrohr ausgebildete Führungsorgan 16b hinein, das an seinem vom Brennerrohr 5b abgewandten Ende bis zur Stirnwand der Drehtrommel 10b reicht und evtl. damit verbunden ist. An der Seite der Stirnwand weist das sonst geschlossene Führungsorgan 16b radial angeordnete Durchgangslöcher 82, Einschnitte, einen ausreichenden Wandabstand oder dgl. auf, damit Heizgase vom Führungsorgan 16b im Bereich von deren Stirnwand in die Drehtrommel 10b eintreten können.

In der Drehtrommel 10b sind Ringscheiben 83 derart angeordnet, daß bei zwischen einander benachbarten Ringscheiben 83 vorhandenen ringförmigen, thermisch aufzubereitenden Körpern 84, insbesondere Kraftfahrzeugreifen, ein mäanderförmiger Verlauf der Heizgase in Richtung der dargestellten Pfeile erzielt wird. Zwischen von der Drehtrommel 10b gehaltenen und in Radialrichtung bis nahe dem Führungsorgan 16b reichenden Ringscheiben 83 sind jeweils insbesondere rohrförmige Abstandstücke 85 angeordnet. Die Ringscheiben 83 können als Träger des Tragorgans 16b ausgebildet sein, wobei zwischen diesem Tragorgan und der jeweiligen Ringscheibe mindestens ein radialer Schlitz vorhanden ist.

Im Bereich des Brennerrohres 5b befindet sich in vorteilhafter Weise eine von der Drehtrommel 10b gehaltene Ringscheibe 83b, die innerhalb der Drehtrommel) 10b durch ein am Deckel 2b angeordnetes, mit Durchgangslöchern 8b versehenes Halteglied 87 in ihrer Betriebslage gehalten wird. Die dem Brennerrohr 5b benachbarte Ringscheibe 83b kann auch in anderer Weise an der Drehtrommel 10b gehalten werden, z.B. mittels einer Klemmeinrichtung.

Die ganze Anordnung von Drehtrommel 10b, Tragorgan 16b, Lochscheiben 83, 83b wird in vorteilhafter Weise so getroffen und derart bemessen, daß bei günstiger Führung der Heizgase ganz bestimmte Reifengrößen thermisch aufbereitet werden können, d.h. die Abmessungen der Teile 10b, 16b, 83 und 85 werden den Abmessungen bestimmter Reihengrößen angepaßt. Es ist außerdem möglich, die Drehtrommel 10b aus der Außentrommel 1b zu entfernen und außerhalb dieser Außentrommel 1b für die nächste thermische Aufbereitung zu beladen.

Wie aus Fig. 6 ersichtlich, gelangen die Heizgase vom Brennerrohr 5b in das Tragorgan 16b und von dessen vom Brennerrohr 5b abgewandten Ende über die Durchgangslöcher 82 in den Innenraum der Drehtrommel 10b. Dort werden die Heizgase durch die Ringscheiben 83 die ringförmigen Körper 84 umströmend mäanderförmig geführt. Die aus der Drehtrommel 10b austretenden Heizgase gelangen über die Durchgangslöcher 86 des Halteglieds 87 in die Leitung 20.

Anstelle der von der Drehtrommel 10b gehaltenen Ringscheiben 83 können auch auf dem Tragorgan 16b im Abstand gehaltene Ringscheiben vorgesehen werden, die ebenfalls für die Unterstützung des Tragorgans 16b herangezogen werden können, wenn sich im Zusammenhang mit den thermisch aufzubereitenden Körpern hierdurch eine günstige Heizgasführung ergibt. Das gleiche gilt für die wechselweise Anordnung der beiden vorbeschriebenen Arten von Ringscheiben.

**Ansprüche**

1. Verfahrern zum thermischen Aufbereiten, insbesondere Pyrolysieren von kohlenstoffhaltigem Ausgangsmaterial, das insbesondere einen hohen Gehalt an Polymeren, organischen Stoffen, z.B. Altgummi, Altreifen, Kunststoffabfälle oder dgl., aufweist, mittels aus einem Verbrennungsvorgang stammenden Verbrennungsgasen wobei die aus der thermischen Zerlegung stammenden Gase und Dämpfe abgekühlt, kondensiert und gewaschen werden, dadurch **gekennzeichnet,** daß das Ausgangsmaterial mittels praktisch sauerstofffreien Verbrennungsgasen thermisch zerlegt wird, wobei der während der Durchführung des Verfahrens herrschende Druck durch Überdruck von Flüssigkeit bestimmt wird.

2. Verfahren nach Anspruch 1, **dadurch gekennzeichnet,** daß zur Abkühlung der aus der thermischen Zerlegung stammenden Gase und Dämpfe Flüssigkeit darin eingesprüht wird, die nach dem Entzug brennbarer und nicht brauchbarer Stoffe zum Kühlen, Kondensieren und Waschen der aus der thermischen Zerlegung stammenden Gase zurückgeführt wird.

3. Vorrichtung zur Durchführung des Verfahrens nach einem der vorhergehenden Ansprüche mit einer Drehtrommel (10) zur Aufnahme des Ausgangsmaterials (17) und mit einer Einrichtung (21) zum Kühlen, Kondensieren und Waschen dieser Gase und Dämpfe zum Trennen von Ölen, Wasser und Schlamm, dadurch **gekennzeichnet,** daß ein Führungsorgan (16) aus einem Brenner (4) stammende Verbrennungsgase durch das Ausgangsmaterial (17) führt und daß zur Erzeugung von Überdruck durch Flüssigkeit ein Pyrolysegas führendes Organ (26, 38) in einen im Durchmesser größeren, mit Flüssigkeit gefüllten offenen Behälter (25; 39) eintaucht.

4. Vorrichtung nach Anspruch 3, dadurch **gekennzeichnet,** daß das Führungsorgan (16) als in der drehbaren Drehtrommel (10) abgestütztes Tragrohr ausgebildet ist, das als Träger für das Ausgangsmaterial (17) dient und sich im Betriebszustand an die Düse des Brenners (4) koaxial anschließt.

5. Vorrichtung nach Anspruch 3 oder 4, dadurch **gekennzeichnet,** daß zwischen der Drehtrommel (10) und der Einrichtung (21) zum Kühlen, Kondensieren und Waschen eine mit einem Mantel (22) versehene Verbindungsleistung (20) vorgesehen ist und daß der Zwischenraum zwischen der Verbindungsleitung (20) und dem Mantel (22) wahlweise beheizbar oder kühlbar ist.

6. Vorrichtung nach einem der Ansprüche 3 bis 5, dadurch **gekennzeichnet,** daß die Drehtrommel (10) in einer ortsfesten Außentrommel (1) untergebracht, drehbar gelagert und mittels eines Antriebsmotors (6) um ihre Achse drehbar ist und daß eine offene Seite der Drehtrommel (10) mit einem an die Kühleinrichtung (20, 22, 24) angeschlossenen Auslaß an der Außentrommel (1) verbunden ist.

7. Vorrichtung nach einem der Ansprüche 3 bis 6, dadurch **gekennzeichnet,** daß die Drehtrommel (10) an ihrer dem Brenner (4) zugewandten Seite eine öffenbare, aus Blech geformte kegelförmige Schleuse (19) hat, durch welche das als Tragorgan ausgebildete Führungsorgan (16) mit Spiel hindurchragt.

8. Vorrichtung nach einem der Ansprüche 3 bis 7, dadurch **gekennzeichnet,** daß die Rückführeinrichtung (35) für Pyrolysegase mit einem Brenner verbunden ist, dessen Abgasleitung in einen Flüssigkeitsbehälter (39) eintaucht und daß die Einrichtung (21) zum Kühlen, Kondensieren und Waschen einen Waschbehälter (21) hat, der in einen im Durchmesser größeren und mit Flüssigkeit gefüllten Sammelbehälter (25) eintaucht.

9. Vorrichtung nach einem der Ansprüche 3 bis 8, dadurch **gekennzeichnet,** daß die Drehtrommel (10)stützende Walzen (11, 12) auf einer längsverfahrbaren Schiene (13) drehbar gelagert sind.

10. Vorrichtung nach einem der Ansprüche 3 bis 9, dadurch **gekennzeichnet,** daß das Führungsorgan (16a) von einer Zwischentrommel (75) in radialem Abstand umgeben ist, die ebenfalls mit radialem Ab stand in der Drehtrommel (10a) untergebracht ist, daß zwischen dem hohlen Führungsorgan (16a) und dem Zwischenraum zwischen der Innentrommel (10) und der Zwischentrommel (75) eine gasleitende Verbindung vorhanden ist und daß an der Außentrommel (1a) ein Abzug für die Pyrolysegase und ein davon getrennter Abzug auf die Heizgase vorgesehen ist.

11. Vorrichtung nach einem der Ansprüche 3 bis 10, dadurch **gekennzeichnet,** daß quer zur Achse der Drehtrommel (10b) angeordnete, das als Tragrohr ausgebildete Führungsorgan (16b) umgebende und durch Abstandstücke (85) in gegenseitigen Abständen gehaltene Ringscheiben (83) derart angeordnet sind, daß die Heizgase mäanderförmig um das Ausgangsmaterial geführt werden, wobei an dem vom Deckel (2b) abgewandten Ende des Führungsorgans (16b) ein radialer Durchlaß (82) vorgesehen ist.

Fig.1

# Fig.2

# Fig.3

Fig.4

# Fig.5

EP 0 379 621 A1

# Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 997 407 (FUJI et al.)<br>* Patentanspruch 1; Figuren 1-3 *<br>--- | 1,2 | C 10 B 53/00<br>C 10 B 1/10 |
| Y | US-A-3 362 887 (RODGERS)<br>* Patentanspruch 1; Spalte 5, Zeilen 38-54; Figur 2 *<br>--- | 1,2 | |
| A | AT-A- 385 050 (RAGAILLER)<br>* Patentansprüche 1-8; Figuren 1-2 *<br>--- | 3-10 | |
| A | DE-C- 430 366 (ALACSKAI KÖSZENBANYA)<br>* Patentanspruch; Figuren *<br>--- | 11 | |
| A | DE-A-2 835 267 (LEIKERT)<br>* Patentansprüche 1,2; Figuren *<br>--- | 1-11 | |
| A | US-A-4 030 984 (CHAMBERS)<br>* Patentansprüche 1,2; Figuren 1,3 *<br>----- | 3-10 | |

RECHERCHIERTE SACHGEBIETE (Int. Cl.5)

C 10 B

Der vorliegende Recherchenbericht wurde für alle Patentansprüche erstellt

| Recherchenort | Abschlußdatum der Recherche | Prüfer |
|---|---|---|
| DEN HAAG | 11-09-1989 | MEERTENS J. |